(19) **Europäisches Patentamt**

**European Patent Office**

**Office européen des brevets**

(11) **EP 1 393 427 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(21) Anmeldenummer: **02729913.0**

(22) Anmeldetag: **24.05.2002**

(51) Int Cl.:
***H02K 3/28*** (2006.01)

(86) Internationale Anmeldenummer:
**PCT/DE2002/001922**

(87) Internationale Veröffentlichungsnummer:
**WO 2002/099951 (12.12.2002 Gazette 2002/50)**

(54) **WICKLUNG FÜR EINE ELEKTRISCHE MASCHINE**

WINDING FOR AN ELECTRIC MACHINE

ENROULEMENT POUR UNE MACHINE ELECTRIQUE

(84) Benannte Vertragsstaaten:
**DE FR IT**

(30) Priorität: **06.06.2001 DE 10127364**

(43) Veröffentlichungstag der Anmeldung:
**03.03.2004 Patentblatt 2004/10**

(73) Patentinhaber: **SIEMENS AKTIENGESELLSCHAFT**
**80333 München (DE)**

(72) Erfinder: **KRUSE, Ralf**
**97072 Würzburg (DE)**

(56) Entgegenhaltungen:
**EP-A- 0 345 915          EP-A- 0 991 164**
**US-A- 3 450 971          US-B1- 6 376 960**

**Beschreibung**

Die Erfindung betrifft eine Wicklung für eine elektrische Maschine, die insbesondere sowohl als Starter, als auch als Generator in einem Kraftfahrzeug eingesetzt werden kann.

Stromdurchflossene Wicklungen werden verwendet, um Magnetfelder zu erzeugen. Insbesondere können sie der elektromagnetischen Energiewandlung dienen. Beispielsweise kann mittels einer Wicklung elektrische in mechanische Energie umgewandelt werden (elektromotorisches Prinzip).

Für die Höhe der elektromagnetisch gewandelten Leistung ist das Produkt aus der Spannung, die an der Wicklung anliegt, und aus dem Strom, der durch die Wicklung hindurchfließt, maßgeblich. Im allgemeinen ist es erforderlich, beim Betrieb des Motors bestimmte Randbedingungen für die Spannung und den Strom einzuhalten. So sollte die Spannung eines integrierten Starter-Generators die Bordnetzspannung von z.B. 42 Volt nicht überschreiten.

Das Verhältnis von Spannung zu Strom kann durch die spannungshaltende Windungszahl der Wicklung verändert werden. Dadurch kann bei gleichbleibender elektromagnetisch gewandelter Leistung der Arbeitsbereich der Spannung und des Stroms an die jeweiligen Erfordernisse angepasst werden. Es ist folglich wünschenswert, die spannungshaltende Windungszahl in feinen Stufen einstellen zu können.

Im Falle einer in Nuten eingelegten Drehfeldwicklung, wie sie bei Elektromotoren vielfach zum Einsatz kommt, berechnet sich die spannungshaltende Windungszahl eines Stranges der Wicklung nach folgender Formel:

$$w = \frac{p \times q \times z_N}{a} \; .$$

Dabei ist p die Anzahl der Polpaare der Wicklung, q die sogenannte Lochzahl, die auch als Nutzahl je Pol und Strang bezeichnet wird, $z_N$ die Leiterzahl je Nut und a die Anzahl der parallel geschalteten Wicklungszweige eines Stranges der Wicklung. Ein Strang ist ein Teil der Wicklung und dadurch definiert, daß alle seine Wicklungszweige parallel geschaltet sind und mit derselben Ansteuerspannung beaufschlagt werden.

Die Parameter p, q, $z_N$ und a werden im Folgenden anhand zweier Beispiele des Standes der Technik näher erläutert.

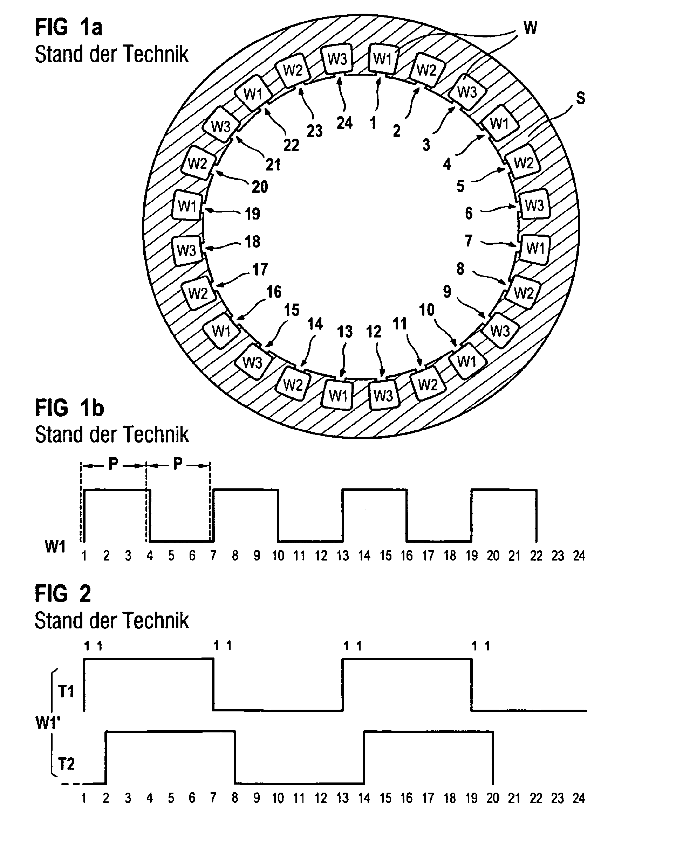

Figur 1a zeigt einen Querschnitt durch einen Stator des Motors mit einer ersten Wicklung W gemäß dem Stand der Technik. Der Stator S weist vierundzwanzig Nuten 1, ..., 24 auf. Die Wicklung W ist als Wellenwicklung ausgestaltet und besteht aus drei Strängen mit je einem einzigen Wicklungszweig W1, W2, W3. Für dieses Beispiel gilt also a=1. Der Wicklungszweig W1 eines ersten Strangs der Wicklung W verläuft entlang acht der Nuten 1, 4, 7, 10, 13, 16, 19, 22. An den Außenseiten des Stators S befinden sich Abschnitte der Wicklung W, die sogenannten Stirnverbinder, die die in den Nuten verlaufenden Abschnitte der Wicklung W miteinander verbinden.

Figur 1b zeigt eine schematische Ansicht des Wicklungszweigs W1 des ersten Strangs der Wicklung W aus Figur 1a. Die vertikalen Abschnitte des Wicklungszweigs W1 verlaufen in den Nuten, während die horizontalen Abschnitte des Wicklungszweigs W1 die Stirnverbinder darstellen. Jeweils ein vertikaler und ein horizontaler Abschnitt des Wicklungszweigs W1 bilden einen magnetischen Pol P. Die Wicklung W weist also acht Pole P und damit vier Polpaare auf. Für dieses Beispiel gilt also p=4. Da jeder Pol offensichtlich nur eine Nut aufweist, gilt q=1. Ebenfalls offensichtlich ist in jeder beteiligten Nut nur ein Leiter angeordnet, so dass $z_N$= 1 gilt. Die spannungshaltende Windungszahl der ersten Wicklung W beträgt folglich

$$w = \frac{4 \times 1 \times 1}{1} = 4 \; .$$

Figur 2 zeigt eine schematische Ansicht eines Stranges einer zweiten Wicklung gemäß dem Stand der Technik. Jeder Strang der zweiten Wicklung weist einen einzigen Wicklungszweig W1' auf, so dass a=1 gilt. Der Wicklungszweig W1' ist zwei mal um den Umfang des Stators gewickelt. Der Wicklungszweig W1' weist also zwei Teilabschnitte T1, T2 auf, die jeweils als Wellenwicklung den Stator einmal bewickeln. Ferner weist die zweite Wicklung vier Pole und damit zwei Polpaare auf, wobei jedem Pol zwei Nuten zugeordnet sind, das heißt jeder Pol wird durch zwei Nutspulen gebildet. So sind dem ersten Pol die Nuten 1 und 2 zugeordnet. Folglich gilt q=2. Wie im ersten Beispiel gilt $z_N$=1. Die spannungshaltende Windungszahl der zweiten Wicklung beträgt folglich

$$w = \frac{2 \times 2 \times 1}{1} = 4 \; .$$

Anwendungsbedingt sind die Anzahl der Polpaare und die Lochzahl festgelegt oder durch äußere Randbedingungen eingeschränkt. So erfordert beispielsweise beim Starter-Generator der Einbauraum im allgemeinen eine hohe Polpaarzahl. Für die Lochzahl wählt man zum Beispiel bei Asynchronmaschinen möglichst einen Wert von mindestens q=3, um die Oberfeldstreuung klein zu halten und dadurch das Betriebsverhalten zu verbessern. Auch die Zahl der parallelen Wicklungszweige kann nicht beliebig gewählt werden, um eine gewünschte spannungshaltende Windungszahl zu erhalten. Wie z.B. in "Asynchronmaschinen", H. Jordan et al , S. 105-106 erläutert, muß die Polzahl 2p ein ganzzahliges Vielfaches der Anzahl an Wicklungszweigen sein, da die Wicklungszweige jeweils räumlich unterschiedliche Teilbereiche des magnetischen Kreises bewickeln und diese Teilbereiche gleichlang sein sollten (vgl. auch "Lehrbuch der Wicklungen elektrischer Maschinen", R. Richter, S.105-106). Darüber hinaus ist es im Allgemeinen nachteilig, mehr als einen Wicklungszweig vorzusehen, da bei mehreren Wicklungszweigen sich im Falle von Asymmetrien im Motor (zum Beispiel Läuferexzentrizitäten) verlustbehaftete Ausgleichströme zwischen den Wicklungszweigen ausbilden. Bei bestehender Gefahr von Unsymmetrien wird in der Regel nur ein einziger Wicklungszweig pro Strang vorgesehen, d.h. a=1.

Die spannungshaltende Windungszahl ist daher im wesentlichen nur noch durch die Leiterzahl je Nut zu beeinflussen. Doch schon eine Änderung der Leiterzahl um nur Eins bedeutet eine Änderung der spannungshaltenden Windungszahl um den Faktor $\frac{p \times q}{a}$.

Eine Feineinstellung der spannungshaltende Windungszahl und damit des Verhältnisses von Spannung zu Strom durch die Wicklung lässt sich so nicht erzielen. Dies gilt erst Recht für Fälle, in denen die Leiterzahl je Nut aufgrund des gewünschten Verhältnisses von Spannung und Strom klein sein muß.

Eine derartige Wicklung für eine elektrische Maschine ist in der EP-A1- 0345915 beschrieben.

Der Erfindung liegt die Aufgabe zugrunde, eine Wicklung anzugeben, die einen feinen Abgleich der spannungshaltende Windungszahl ermöglicht.

Die Aufgabe wird durch eine Wicklung für eine elektrische Maschine mit den Merkmalen des Anspruchs 1 gelöst.

Die unterschiedliche Bewicklung des mindestens einen Pols durch mindestens zwei der Wicklungszweige ermöglicht eine feine Einstellung der spannungshaltenden Windungszahl, wie weiter unten anhand der Ausführungsbeispiele ersichtlich ist.

Trotz der unterschiedlichen Bewicklung ist das durch die Wicklung erzeugte Magnetfeld symmetrisch, das heißt für jeden Pol abgesehen vom Wechsel der Polarität gleich, da die Pole durch die Wicklungszweige im Sinne eines im wesentlichen symmetrischen Strombelags bewickelt sind. Der Strombelag ist die Summe der Ströme durch alle Wicklungsteile an einem bestimmten Ort. Ein im wesentlichen symmetrischer Strombelag bedeutet, dass der Strombelag abgesehen vom Vorzeichenwechsel für alle Pole im wesentlichen gleich ist.

Da mindestens ein Pol durch mindestens zwei Wicklungszweige bewickelt ist, bewickeln diese Wicklungszweige zumindest einen Teilbereich des magnetischen Kreises gemeinsam. Asymmetrien (z.B. Läuferexzentrizitäten), die diesen Teilbereich betreffen, wirken sich auf beide Wicklungszweige in gleicher Weise aus, so daß es durch diese Asymmetrien zu keinen Ausgleichströmen zwischen den Wicklungszweigen kommt. Je mehr Wicklungszweige zugleich an der Bewicklung möglichst vieler Pole beteiligt sind, umso weniger bewirken Asymmetrien Ausgleichströme zwischen den Wicklungszweigen. Es stellt folglich keinen Nachteil dar, mehr als nur einen Wicklungszweig pro Strang vorzusehen.

Da mindestens ein Pol durch mindestens zwei Wicklungszweige bewickelt ist, ist es ausgeschlossen, dass die unterschiedliche Bewicklung darin besteht, dass jedem Pol genau ein Wicklungszweig zugeordnet ist, von dem der jeweilige Pol ausschließlich bewickelt ist.

Da mindestens einer der Wicklungszweige an der Bewicklung von mindestens zwei Polen beteiligt ist, wird ausgeschlossen, dass die unterschiedliche Bewicklung darin besteht, dass jeder Wicklungszweig nur an der Bewicklung eines einzigen Pols beteiligt ist.

Beispielsweise können sich die den Wicklungszweigen zugeordneten Bewicklungen des mindestens einen Pols hinsichtlich der Windungszahlen voneinander unterscheiden.

So kann ein Wicklungszweig den Pol mit einer oder mehr Windungen weniger oder mehr bewickeln als ein anderer Wicklungszweig.

Zur Verringerung von Ausgleichströmen zwischen den Wicklungszweigen ist es vorteilhaft, wenn sich die Windungszahlen der Wicklungszweige für den Pol nicht stark voneinander unterscheiden. Vorzugsweise beträgt der Unterschied der Windungszahlen 1.

Besonders geringe Ausgleichströme und ein besonders symmetrischer Strombelag werden erzielt, wenn die Summe der Windungszahlen aller Wicklungszweige für jeden Pol gleich ist. Dadurch wird jeder Pol durch die Wicklung gleich stark bewickelt. Bei einer großen Anzahl von Polen wirkt sich eine Abweichung der Summe der Windungszahlen aller Wicklungszweige für einen oder wenige Pole von den entsprechenden Summen für die übrigen Pole auf die Ausgleichströme und den Strombelag nur geringfügig aus, so dass es genügt, wenn die Summe der Windungszahlen aller Wicklungszweige für jeden Pol lediglich im wesentlichen gleich ist.

Beispielsweise kann mindestens einer der Wicklungszweige mindestens einen der Pole schwächer bewickeln als die übrigen Pole. Die Anzahl an Windungen, mit denen ein Pol durch einen Wicklungszweig weniger bewickelt ist als die übrigen Pole, wird im folgenden als die Anzahl an Fehlwindungen bezeichnet.

Durch z.B. eine halbe Fehlwindung wird also ein Pol schwächer bewickelt. Die schwächere Bewicklung des Pols durch den Wicklungszweig kann so weit gehen, dass der Pol überhaupt nicht durch den Wicklungszweig bewickelt ist.

Die spannungshaltende Windungszahl einer Wicklung mit Fehlwindungen ist im allgemeinen kleiner als die spannungshaltende Windungszahl einer entsprechenden Wicklung ohne Fehlwindungen. Je mehr Wicklungszweige Fehlwindungen aufweisen und je mehr Fehlwindungen der einzelne Wicklungszweig aufweist, umso niedriger ist im allgemeinen die spannungshaltende Windungszahl.

Die Anzahl an Fehlwindungen muss nicht bei allen Polen mit Fehlwindungen gleich groß sein. Um einen möglichst symmetrischen Strombelag zu erzielen, ist es jedoch vorteilhaft, alle Fehlwindungen der Wicklung möglichst gleichmäßig auf die Pole zu verteilen.

Um Ausgleichströme zu vermeiden, ist es vorteilhaft, wenn die Anzahl an Fehlwindungen pro Wicklungszweig im wesentlichen gleich groß ist.

Die Wicklung kann zum Beispiel folgende Merkmale aufweisen: Die Wicklung weist 2 x p Pole auf, die p Polpaare bilden. Ferner weist die Wicklung p Wicklungszweige auf. Die Bewicklungen der Pole durch die Wicklungszweige unterscheiden sich dadurch voneinander, dass jeder Wicklungszweig an der Bewicklung jeweils eines Polpaares schwächer beteiligt ist als die übrigen Wicklungszweige.

Jedem Polpaar ist also genau ein Wicklungszweig zugeordnet, von dem es schwächer bewickelt wird als durch die übrigen Wicklungszweige. Jeder Wicklungszweig bewickelt also genau ein Polpaar schwächer als die übrigen Wicklungszweige.

Werden Polpaare durch Wicklungszweige schwächer bewickelt, so sind längere Stirnverbinder erforderlich, durch die die betreffenden Wicklungszweige an den durch diese schwächer bewickelten Polpaaren vorbeigeführt werden. Für die oben beschriebene Wicklung mit den p Polpaaren und p Wicklungszweigen liegen alle verlängerten Stirnverbinder an derselben Nutendenseite, d.h. Stirnseite, wodurch die Wicklung einseitig beschwert und verdickt ist.

Eine symmetrische Verteilung der verlängerten Stirnverbinder wird durch folgende Wicklung erzielt:

Die Wicklung weist 2 x p Pole und 2 x p Wicklungszweige auf. Die Bewicklung der Pole durch die Wicklungszweige unterscheiden sich dadurch voneinander, dass jeder Wicklungszweig zwei zueinander benachbarte Pole schwächer bewickelt als die übrigen Pole, wobei jeder Pol durch zwei Wicklungszweige schwächer bewickelt ist als durch die übrigen Wicklungszweige und wobei ein dem Pol benachbarter Pol durch die zwei Wicklungszweige unterschiedlich bewickelt ist.

Bei dieser Wicklung sind p der zwei mal p Wicklungszweige identisch mit den p Wicklungszweigen der vorigen Wicklung, die p Wicklungszweige aufweist. Die übrigen p Wicklungszweige stellen um einen Pol verschobene zur Wickellängsachse symmetrische Spiegelbilder der p Wicklungszweige der vorigen Wicklung dar.

Statt mindestens einen Pol schwächer zu bewickeln als die übrigen Pole, kann ein Wicklungszweig mindesten einen Pol stärker bewickeln als die übrigen Pole.

Die Windungen, mit denen ein Pol stärker bewickelt ist als die übrigen Pole, werden im folgenden als Zusatzwindungen bezeichnet. Durch z.B. eine halbe Zusatzwindung wird also ein Pol stärker bewickelt.

Es liegt im Rahmen der Erfindung, eine Wicklung vorzusehen, die sowohl Fehlwindungen als auch Zusatzwindungen aufweist. Auch ein und derselbe Wicklungszweig kann sowohl Fehl- als auch Zusatzwindungen aufweisen.

Die spannungshaltende Windungszahl einer Wicklung mit Zusatzwindungen ist im allgemeinen größer als die spannungshaltende Windungszahl einer entsprechenden Wicklung ohne Zusatzwindungen. Je mehr Wicklungszweige Zusatzwindungen aufweisen und je mehr Zusatzwindungen ein Wicklungszweig aufweist, umso höher ist im allgemeinen die spannungshaltende Windungszahl.

Die Anzahl an Zusatzwindungen muss nicht bei allen Polen mit Zusatzwindungen gleich groß sein. Um einen möglichst symmetrischen Strombelag zu erzielen, ist es jedoch vorteilhaft, alle Zusatzwindungen der Wicklung möglichst gleichmäßig auf die Pole zu verteilen.

Um Ausgleichströme zu vermeiden, ist es vorteilhaft, wenn die Anzahl an Zusatzwindungen pro Wicklungszweig im wesentlichen gleich groß ist.

Die Wicklung kann zum Beispiel folgende Merkmale aufweisen:

Die Wicklung weist zwei mal p Pole auf, die p Polpaare bilden. Ferner weist die Wicklung p Wicklungszweige auf. Die Bewicklungen der Pole durch die Wicklungszweige unterscheiden sich dadurch voneinander, dass jeder Wicklungszweig jeweils ein Polpaar stärker bewickelt als die übrigen Wicklungszweige.

Jedem Polpaar ist also genau ein Wicklungszweig zugeordnet, von dem es stärker bewickelt wird als durch die übrigen Wicklungszweige. Jeder Wicklungszweig bewickelt genau ein Polpaar stärker als die übrigen Wicklungszweige.

Bei diesem Beispiel liegen die durch die stärkere Bewicklung zusätzlich erforderlichen Stirnverbinder an derselben Nutendenseite, d.h. Stirnseite, so dass die Wicklung einseitig beschwert und verdickt ist.

Eine symmetrische Verteilung der verlängerten Stirnverbinder wird durch folgende Wicklung erzielt:

Die Wicklung weist 2 mal p Pole und zwei mal p Wicklungszweige auf. Die Bewicklungen der Pole durch die Wicklungszweige unterscheiden sich dadurch voneinander, dass jeder Wicklungszweig zwei zueinander benachbarte Pole stärker bewickelt als die übrigen Pole, wobei jeder Pol durch zwei Wicklungszweige stärker bewickelt ist als durch die übrigen Wicklungszweige und wobei ein dem Pol benachbarter Pol durch die zwei Wicklungszweige unterschiedlich bewickelt ist. p der zwei mal p Wicklungszweige sind identisch mit den p Wicklungszweigen der vorigen Wicklung mit den p Wicklungszweigen. Die übrigen p Wicklungszweige stellen um einen Pol verschobene zur Wickellängsachse symmetrische Spiegelbilder der p Wicklungszweige der vorigen Wicklung dar.

Die Pole können durch mehrere Nutspulen gebildet werden. In diesem Fall ist es möglich, dass sich die den Wicklungszweigen zugeordneten Bewicklungen mindestens einen Pols hinsichtlich der Windungszahlen der Nutspulen des Pols voneinander unterscheiden.

Ausgleichströme können in diesem Fall besonders wirkungsvoll vermieden werden, indem die Windungszahlen der Wicklungszweige für möglichst viele Pole gleich sind. Vorzugsweise sind die Windungszahlen von jedem Wicklungszweig für alle Pole gleich. Fehl- oder Zusatzwindungen treten in diesem Fall nur noch in den Nutspulen, nicht aber bei Betrachtung der gesamten Bewicklung eines Pols auf.

Die Anzahl an Fehlwindungen eines Wicklungszweiges für eine Nutspule kann so groß sein, dass die Nutspule ganz entfällt.

Es ist nicht erforderlich, dass bei allen Nutspulen mit Fehl- oder Zusatzwindungen die Anzahl der Fehl- oder Zusatzwindungen gleich groß ist.

Die Wicklung oder ein Wicklungszweig kann zugleich Fehl- und Zusatzwindungen aufweisen.

Ein besonders symmetrischer Strombelag wird erzielt, wenn die Summe der Windungszahlen aller Wicklungszweige für jede Nutspule des mindestens einen Pols gleich ist. Es ist vorteilhaft, wenn dies auch für möglichst viele andere Pole gilt.

Jeder Wicklungszweig kann mindestens zwei Teilabschnitte aufweisen, wobei jeder Teilabschnitt jeden Pol mit einer halben Windung bewickelt, und wobei jeder Teilabschnitt höchstens mit einer halben Windung an der Bewicklung derselben Nutspule beteiligt ist.

Die Wicklung ist also als Wellenwicklung ausgestaltet, wobei jeder Teilabschnitt der Wicklung ebenfalls eine Wellenwicklung bildet.

Beispielsweise kann die Wicklung zwei parallel geschaltete Wicklungszweige aufweisen, wobei jeder Wicklungszweig drei Teilabschnitte aufweist. Jeder Pol kann durch zwei Nutspulen gebildet werden. Jede Nutspule kann durch zwei Teilabschnitte eines der Wicklungszweige bewickelt sein und durch einen Teilabschnitt eines anderen der Wicklungszweige bewickelt sein.

Da jede Nutspule mit insgesamt drei halben Windungen bewickelt ist, und jeder Pol durch zwei Nutspulen gebildet wird, wird jeder Pol durch die Wicklung mit drei Windungen bewickelt und ist die Summe der Windungszahlen aller Wicklungszweige für jede Nutspule gleich drei Halbe.

Sind die Windungszahlen pro Wicklungszweig für jeden Pol gleich, so muss die eine Nutspule jedes Pols durch die beiden Teilabschnitte des ersten Wicklungszweigs und durch einen Teilabschnitts des zweiten Wicklungszweigs bewickelt sein, während die andere Nutspule jedes Pols durch die beiden Teilabschnitte des zweiten Wicklungszweigs und durch einen Teilabschnitt des ersten Wicklungszweigs bewickelt sein muß.

Zur Verringerung von Ausgleichströmen zwischen den Wicklungszweigen ist es vorteilhaft, wenn jeder Wicklungszweig genauso viele linke Nutspulen von Polen bewickelt wie rechte Nutspulen der Pole. Ist die Wicklung als Drehfeldwicklung ausgestaltet, und läuft das Drehfeld in Richtung von der linken Nutspule eines Pols zur rechten Nutspule eines Pols um, so eilt stets die in linken Nutspulen induzierte Spannung der in den rechten Nutspulen induzierten Spannung voraus. Bei ungleichmäßiger Verteilung der Windungen eines Wicklungszweigs zwischen den linken Nutspulen und den rechten Nutspulen der Pole kommt es zu Ausgleichströmen zwischen den Wicklungszweigen.

Bewickeln die Teilabschnitte Nutspulen jeweils mit einer halben Windung, so sind die Wicklungszweige im Allgemeinen als Wellenwicklungen ausgebildet.

Die Pole können gleichmäßig entlang einer in sich geschlossenen Linie angeordnet sein.

Beispielsweise handelt es sich bei der Wicklung um eine ringförmige Statorwicklung.

Die Wicklung kann mehr als einen Strang aufweisen, wobei die Stränge sinusförmig bestromt und phasenverschoben zueinander angesteuert werden können, so dass die Wicklung als Drehfeldwicklung verwendet werden kann. Es ist möglich, eine einsträngige sinusförmig bestromte Wicklung als Drehfeldwicklung einzusetzen.

Die Erfindung kann jedoch auf alle möglichen anderen Arten von Wicklungen, wie z.B. Erregerwicklungen von Gleich- oder Synchronmaschinen, angewendet werden.

Vorzugsweise ist die Lochzahl der Wicklung eine natürliche Zahl. Im Falle einer Drehfeldwicklung handelt es sich um eine Ganzlochwicklung. Im Vergleich zu einer Bruchlochwicklung, d.h. einer Wicklung mit gebrochener Lochzahl, weist das Luftspaltfeld einer Drehfeld-Ganzlochwicklung im Allgemeinen weniger Oberwellen auf. Die Folge ist im Allgemeinen ein günstigeres Betriebsverhalten.

Im Folgenden werden Ausführungsbeispiele der Erfindung anhand der Figuren näher erläutert.

Figur 3      zeigt eine schematische Ansicht einer ersten Wicklung mit 4 Wicklungszweigen, 8 Polen und 24 Nuten, wobei jeder Wicklungszweig eine Fehlwindung aufweist.

Figur 4      zeigt eine schematische Ansicht einer zweiten Wicklung mit 4 Wicklungszweigen, 8 Polen und 24 Nuten, wobei jeder Wicklungszweig eine Zusatzwindung aufweist.

Figur 5      zeigt eine schematische Ansicht einer dritten Wicklung mit 8 Wicklungszweigen, 8 Polen und 24 Nuten, wobei jeder Wicklungszweig eine Fehlwindung aufweist.

Figur 6      zeigt eine schematische Ansicht einer vierten Wicklung mit 8 Wicklungszweigen, 8 Polen und 24 Nuten, wobei jeder Wicklungszweig eine Zusatzwindung aufweist.

Figur 7  zeigt eine schematische Ansicht einer fünften Wicklung mit 3 Wicklungszweigen, 12 Polen, und 36 Nuten, wobei jeder Wicklungszweig zwei Fehlwindungen aufweist.

Figur 8  zeigt eine schematische Ansicht einer sechsten Wicklung mit 3 Wicklungszweigen, 12 Polen und 36 Nuten, wobei jeder Wicklungszweig zwei Zusatzwindungen aufweist.

Figur 9  zeigt eine schematische Ansicht einer siebten Wicklung mit 3 Wicklungszweigen, 12 Polen und 36 Nuten, wobei jeder Wicklungszweig zwei Fehlwindungen aufweist.

Figur 10  zeigt eine schematische Ansicht einer achten Wicklung mit 3 Wicklungszweigen, 12 Polen und 36 Nuten, wobei jeder Wicklungszweig eine Fehlwindung aufweist.

Figur 11  zeigt eine schematische Ansicht einer neunten Wicklung mit 3 Wicklungszweigen, 12 Polen und 36 Nuten, wobei jeder Wicklungszweig eine Fehlwindung und eine Zusatzwindung aufweist.

Figur 12  zeigt eine schematische Ansicht einer zehnten Wicklung mit 2 Wicklungszweigen, 4 Polen und 24 Nuten, wobei jeder Wicklungszweig drei Teilabschnitte aufweist und wobei jeder Pol aus zwei Nutspulen gebildet wird.

Figur 13  zeigt eine schematische Ansicht einer elften Wicklung mit 2 Wicklungszweigen, 4 Polen und 24 Nuten, wobei jeder Wicklungszweig drei Teilabschnitte aufweist und wobei jeder Pol aus zwei Nutspulen gebildet wird.

Figur 14  zeigt eine schematische Ansicht einer zwölften Wicklung mit 2 Wicklungszweigen, 4 Polen und 24 Nuten, wobei jeder Pol aus zwei Nutspulen gebildet wird.

Figur 15  zeigt eine schematische Ansicht einer dreizehnten Wicklung mit 2 Wicklungszweigen, 4 Polen und 24 Nuten, wobei jeder Pol aus zwei Nutspulen gebildet wird.

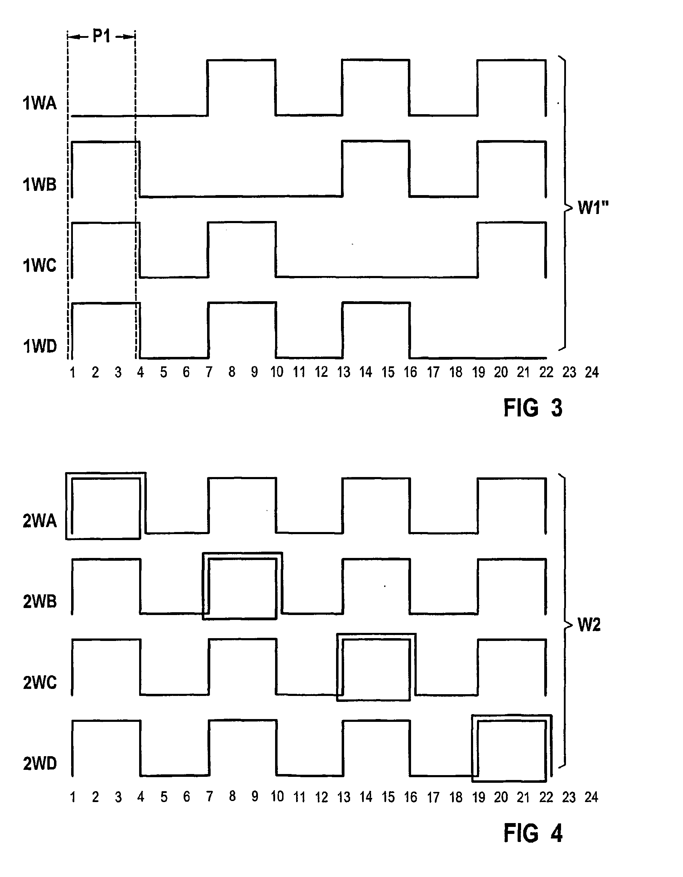

In einem ersten Ausführungsbeispiel ist eine erste Wicklung W1" vorgesehen mit drei Strängen, wobei jeder Strang vier parallel geschaltete Wicklungszweige 1WA, 1WB, 1WC, 1WD aufweist (siehe Figur 3). Es gilt also a=4. In der Figur 3 ist nur einer der drei Stränge dargestellt.

Die Wicklungszweige 1WA, 1WB, 1WC, 1WD sind als Wellenwicklungen ausgestaltet. Die erste Wicklung W1" weist 24 Nuten 1, ... 24 auf.

Der erste Wicklungszweig 1WA verläuft entlang der Nuten 7, 10, 13, 16, 19, 22. Diese in den Nuten verlaufenden Abschnitte des ersten Wicklungszweiges 1WA werden durch außerhalb der Nuten verlaufende Stirnverbinder miteinander verbunden. In Figur 3 verlaufen die Stirnverbinder horizontal, während die in den Nuten verlaufenden Abschnitte vertikal verlaufen.

Die erste Wicklung W1 " weist insgesamt acht Pole auf, die jeweils durch drei der vier Wicklungszweige 1WA, 1WB, 1WC, 1WD bewickelt sind. Es gilt also p=4. Ein Pol wird durch eine durch den Strang bewickelte Nut und den sich nach rechts erstreckenden Stirnverbinder bis zur nächsten durch den Strang bewickelte Nut gebildet. Es gilt also q=1. In Figur 3 ist der Bereich des ersten Pols P1 für den dargestellten Strang schematisch dargestellt.

Die acht Pole bilden vier Polpaare. Jeder Wicklungszweig ist an der Bewicklung jeweils eines Polpaares nicht beteiligt.

Die Summe der Windungszahlen aller Wicklungszweige beträgt für jeden Pol drei halbe. Beispielsweise wird der erste Pol P1 durch den zweiten Wicklungszweig 1WB, den dritten Wicklungszweig 1WC und den vierten Wicklungszweig WD mit je einer halben Windung bewickelt, während er durch den ersten Wicklungszweig WA nicht bewickelt wird.

In jeder Nut sind insgesamt drei Leiter angeordnet, so dass $z_N$=3 beträgt.

Die spannungshaltende Windungszahl der ersten Wicklung W1'' beträgt folglich:

$$w1 = \frac{4 \times 1 \times 3}{4} = 3 \; .$$

Eine herkömmliche Wicklung mit 4 Polpaaren und der Lochzahl q=1 hätte die spannungshaltende Windungszahl w=4, wie aus dem ersten Beispiel des Standes der Technik (siehe Figur 1b) ersichtlich ist. Der Einbau von Fehlwindungen in Wicklungszweigen ermöglicht einen Feinabgleich der spannungshaltenden Windungszahl auf w=3. Der einzelne Wicklungszweig bewickelt fast alle Pole. Die Wicklungsverteilung ist insofern relativ gleichmäßig. Verlustträchtige Ausgleichströme zwischen den Wicklungszweigen sind kaum vorhanden. Bei höherer Polzahl und entsprechend mehreren Wicklungszweigen ist die Wicklungsverteilung noch gleichmäßiger.

In einem zweiten Ausführungsbeispiel ist eine zweite Wicklung W2 vorgesehen, die drei Stränge aufweist, wobei jeder Strang durch vier parallel geschaltete Wicklungszweige 2WA, 2WB, 2WC, 2WD gebildet wird (siehe Figur 4). Daraus folgt a=4. In der Figur 4 ist nur einer der drei Stränge dargestellt.

Wie im ersten Ausführungsbeispiel weist die zweite Wicklung W2 acht Pole auf, die vier Polpaare bilden, d.h. p=4.

Im Gegensatz zum ersten Ausführungsbeispiel weist jeder Wicklungszweig 2WA, 2WB, 2WC, 2WD eine Zusatzwindung auf, wobei die Zusatzwindungen gleichmäßig auf die Polpaare verteilt sind, so dass jedes Polpaar durch fünf Windungen bewickelt ist. In jeder Nut sind fünf Leiter angeordnet, so dass $z_N$ = 5 ist. Auch hier wird jeder Pol durch eine Nut und die nach rechts verlaufenden daran angrenzenden Stirnverbinder gebildet, das heißt ein Pol wird durch eine Nutspule gebildet. Folglich beträgt q=1.

Die spannungshaltende Windungszahl der zweiten Wicklung W2 ergibt sich zu:

$$ w2 = \frac{4 \times 1 \times 5}{4} = 5 \, . $$

Die Zusatzwindungen sind nach Art einer Schleifenwicklung ausgeführt. Auf diese Weise wird erreicht, dass die vier Wicklungszweige 2WA, 2WB, 2WC, 2WD an der gleichen Stelle beginnen und an der gleichen Stelle enden.

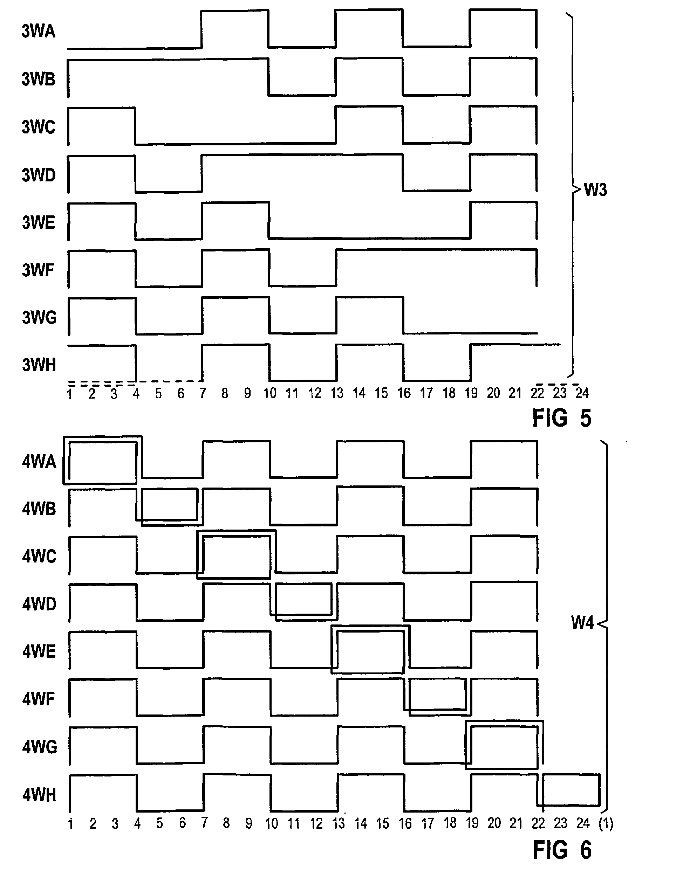

In einem dritten Ausführungsbeispiel ist eine dritte Wicklung W3 vorgesehen, die aus drei Strängen besteht, wobei jeder Strang acht parallel geschaltete Wicklungszweige 3WA, 3WB, 3WC, 3WD, 3WE, 3WF, 3WG, 3WH aufweist (siehe Figur 5). Es gilt also a=8. In der Figur 5 ist nur einer der drei Stränge dargestellt.

Die dritte Wicklung W3 weist 8 Pole und 24 Nuten 1, ... 24 auf. Es gilt also p=4.

Jeder der Wicklungszweige bewickelt zwei zueinander benachbarte Pole nicht. Jeder Wicklungszweig bewickelt ein anderes Paar von Polen nicht als die übrigen Wicklungszweige.

Der erste Wicklungszweig 3WA, der dritte Wicklungszweig 3WC, der fünfte Wicklungszweig 3WE und der siebte Wicklungszweig 3WG entsprechen den Wicklungszweigen 1WA, 1WB, 1WC, 1WD des ersten Ausführungsbeispiels. Der zweite Wicklungszweig 3WB entspricht dem um die Wickellängsachse gespiegelten Spiegelbild des ersten Wicklungszweiges 3WA, der um einen Pol nach rechts verschoben wurde. Das Entsprechende gilt für den vierten Wicklungszweig 3WD, den sechsten Wicklungszweig 3WF und den achten Wicklungszweig 3WH.

Jeder Pol wird also durch zwei Wicklungszweige nicht bewickelt. Beispielsweise wird der erste Pol durch den ersten Wicklungszweig 3WA und den achten Wicklungszweig 3WH nicht bewickelt.

Der zweite Pol, der rechts vom ersten Pol angeordnet ist, wird vom ersten Wicklungszweig 3WA nicht bewickelt, aber wird vom achten Wicklungszweig 3WH bewickelt. Dafür wird er vom zweiten Wicklungszweig 3WB nicht bewickelt. Die zwei Wicklungszweige die einen Pol bewickeln, bewickeln folglich einen dem Pol benachbarten Pol unterschiedlich.

Die Summe der Windungszahlen aller Wicklungszweige für jeden Pol beträgt 6 Halbe. In jeder Nut sind sechs Leiter angeordnet, so dass $z_N$ = 6 beträgt.

Die spannungshaltende Windungszahl der dritten Wicklung W3 beträgt folglich

$$ w3 = \frac{4 \times 1 \times 6}{8} = 3 \, . $$

Die verlängerten Stirnverbinder der Wicklungszweige im Bereich der Fehlwindungen sind gleichmäßig auf beide Wickelköpfe, das heißt auf beide Nutendenseiten, d.h. Stirnseiten, verteilt.

In einem vierten Ausführungsbeispiel ist eine vierte Wicklung W4 vorgesehen, die drei Stränge aufweist, wobei jeder Strang durch acht Wicklungszweige 4WA, 4WB, 4WC, 4WD, 4WE, 4WF, 4WG, 4WH gebildet wird (siehe Figur 6). In der Figur 6 ist nur einer der drei Stränge dargestellt.

Der Unterschied zum dritten Ausführungsbeispiel besteht darin, das an Stelle der Fehlwindung in jedem Wicklungszweig eine Zusatzwindung tritt.

In jeder Nut sind 10 Leiter angeordnet, so dass $z_N$ 10 beträgt.

Die spannungshaltende Windungszahl der vierten Wicklung W4 ergibt sich folglich zu:

$$ w4 = \frac{4 \times 1 \times 10}{8} = 5 \, . $$

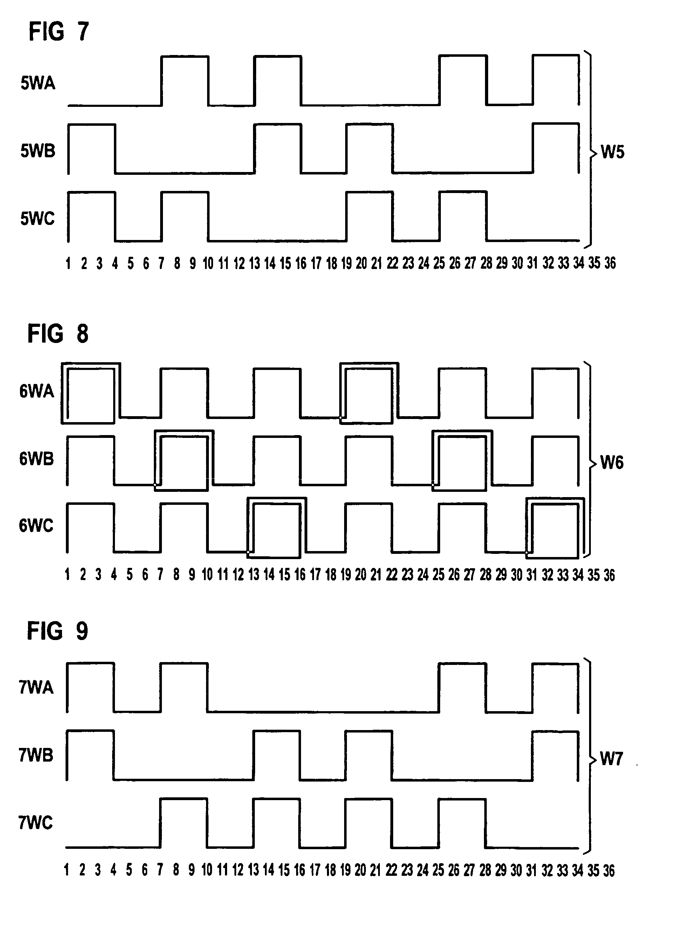

In einem fünften Ausführungsbeispiel ist eine fünfte Wicklung W5 vorgesehen, die drei Stränge aufweist, wobei jeder Strang durch drei Wicklungszweige 5WA, 5WB, 5WC gebildet wird (siehe Figur 7). Es gilt also a=3. In der Figur 7 ist nur einer der drei Stränge dargestellt. Die fünfte Wicklung W5 weist zwölf Pole auf, die sechs Polpaare bilden, das heißt, p=6. Ferner weist die fünfte Wicklung W5 36 Nuten 1, ... 36 auf.

Jeder Wicklungszweig weist zwei Fehlwindungen auf, so dass jeder Wicklungszweig zwei Polpaare nicht bewickelt. Die Fehlwindungen sind gleichmäßig auf die Pole verteilt. Jeder Pol ist durch zwei halbe Windungen bewickelt. Das heißt, die Summe der Windungszahlen aller Wicklungszweige ist für jeden Pol zwei Halbe. Die Anzahl der Leiter in jeder Nut beträgt $z_N$ = 2.

Die spannungshaltende Windungszahl der fünften Wicklung W5 ergibt sich folglich zu:

$$ w5 = \frac{6 \times 1 \times 2}{3} = 4 \, . $$

In einem sechsten Ausführungsbeispiel ist eine sechste Wicklung W6 vorgesehen, die im wesentlichen der fünften Wicklung W5 entspricht mit dem Unterschied, dass statt Fehlwindungen Zusatzwindungen vorgesehen sind (siehe Figur 8). Da die Anzahl der Leiter pro Nut vier beträgt, ergibt sich die spannungshaltende Windungszahl zu:

$$w6 = \frac{6 \times 1 \times 4}{3} = 8 \; .$$

In einem siebten Ausführungsbeispiel ist eine siebte Wicklung W7 vorgesehen, die im wesentlichen der fünften Wicklung W5 des fünften Ausführungsbeispiels entspricht, mit dem Unterschied, dass die Wicklungszweige nicht gleichartig aufgebaut sind (siehe Figur 9).
Im fünften Ausführungsbeispiel ist die Reihenfolge der Windungen und der Fehlwindungen für jeden Wicklungszweig gleich. Im siebten Ausführungsbeispiel dagegen unterscheiden sich die Reihenfolgen der Windungen und Fehlwindungen des zweiten Wicklungszweigs 7WB vom ersten Wicklungszweig 7WA und vom dritten Wicklungszweig 7WC. Sowohl im ersten Wicklungszweig 7WA als auch im dritten 7WC folgen die 4 Windungen aufeinander und folgen die Fehlwindungen aufeinander. Im Gegensatz hierzu folgen im zweiten Wicklungszweig 7 WB nur zwei Windungen aufeinander, und die Fehlwindungen sind voneinander durch zwei Windungen getrennt. Trotzdem ist auch bei der siebten Wicklung W7 die Summe der Windungszahlen aller Wicklungszweige für jeden Pol gleich zwei Halbe.
Die spannungshaltende Windungszahl der siebten Wicklung W7 ergibt sich folglich wie im fünften Ausführungsbeispiel zu:

$$w7 = \frac{6 \times 1 \times 2}{3} = 4 \; .$$

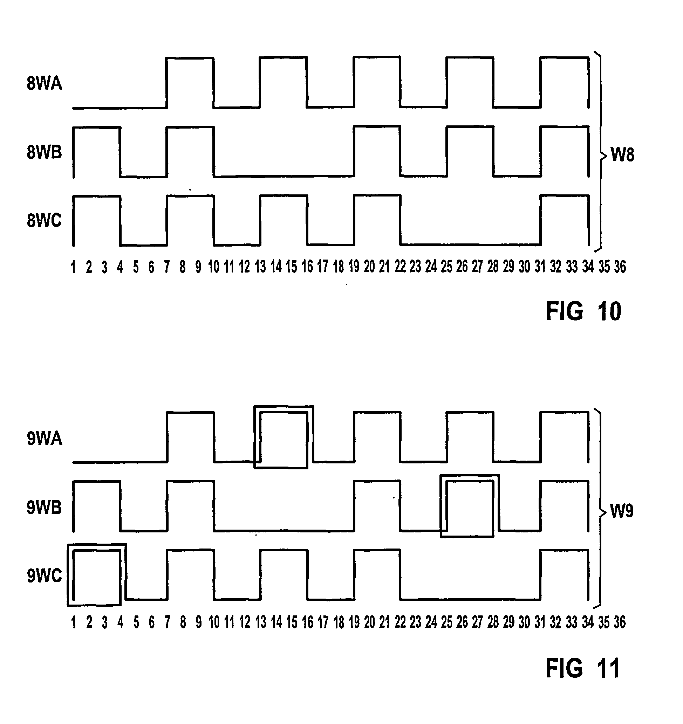

In einem achten Ausführungsbeispiel ist eine achte Wicklung W8 vorgehen, die im wesentlichen der fünften Wicklung W5 des fünften Ausführungsbeispiels entspricht mit dem Unterschied, dass jeder Wicklungszweig 8WA, 8WB, 8WC nur eine Fehlwindung statt zwei Fehlwindungen aufweist (siehe Figur 10). Die Fehlwindungen sind möglichst gleichmäßig auf die Pole verteilt. Dennoch ist die Summe der Windungszahlen aller Wicklungszweige für die Hälfte der Pole gleich zwei Halbe und für die andere Hälfte der Pole gleich drei Halbe. Die mittlere Anzahl an Leitern in einer Nut ergibt sich dadurch zu $z_N = 2{,}5$.
Die spannungshaltende Windungszahl der achten Wicklung W8 beträgt folglich:

$$w8 = \frac{6 \times 1 \times 2{,}5}{3} = 5 \; .$$

In einem neunten Ausführungsbeispiel ist eine neunte Wicklung vorgesehen, die im wesentlichen der fünften Wicklung W5 des fünften Ausführungsbeispiels entspricht, mit dem Unterschied, dass statt zwei Fehlwindungen pro Wicklungszweig eine Fehlwindung und eine Zusatzwindung vorgesehen sind (siehe Figur 11). Die Fehlwindungen und Zusatzwindungen sind gleichmäßig auf die Pole verteilt, so dass die Summe der Windungszahlen aller Wicklungszweige für jeden Pol drei Halbe beträgt. Die Anzahl der Leiter pro Nut beträgt $z_N = 3$. Die spannungshaltende Windungszahl der neunten Wicklung W9 beträgt:

$$w9 = \frac{6 \times 1 \times 3}{3} = 6 \; .$$

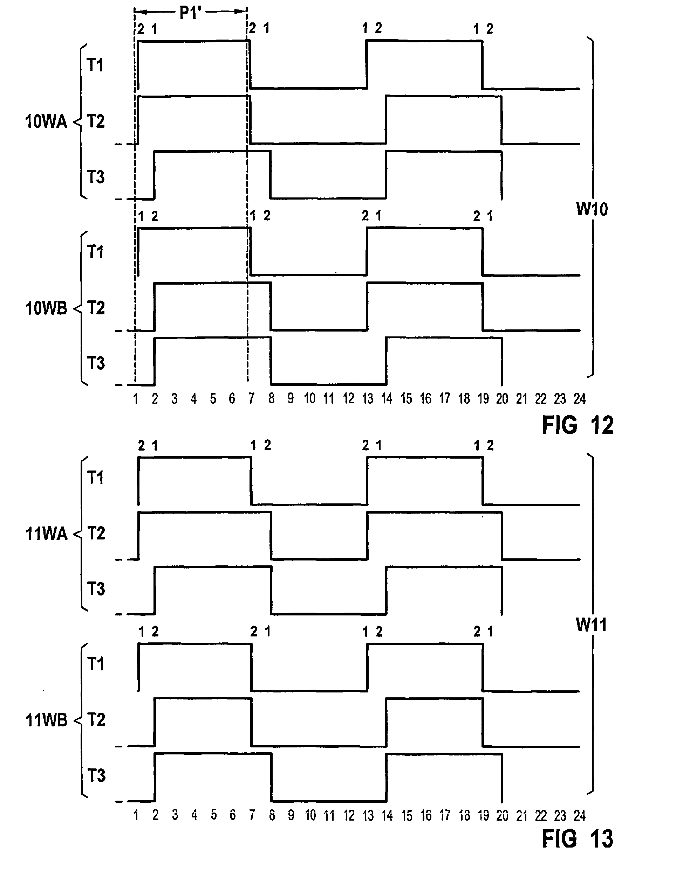

In einem zehnten Ausführungsbeispiel ist eine zehnte Wicklung W10 vorgesehen, die drei Stränge aufweist, wobei jeder Strang durch zwei Wicklungszweige 10WA, 10WB gebildet wird, d.h. a=2 (siehe Figur 12). In der Figur 12 ist nur einer der drei Stränge dargestellt. Jeder der Wicklungszweige 10WA, 10WB weist drei in Reihe geschaltete Teilabschnitte T1, T2, T3 auf, die jeweils jeden Pol der zehnten Wicklung W10 bewickeln.
Die zehnte Wicklung W10 weist 4 Pole und 24 Nuten auf, wobei jeder Pol durch zwei Nutspulen gebildet wird. Es gilt also p=2 und q=2. Beispielsweise wird der erste Pol P1' durch die bewickelte erste Nut, die bewickelte zweite Nut und die angrenzenden nach rechts verlaufenden Stirnverbinder gebildet. Der Bereich des ersten Pols P1' ist in der Figur 12 veranschaulicht.
Die zwei Wicklungszweige 10WA, 10WB unterscheiden sich hinsichtlich der, Windungszahlen der Nutspulen eines Pols voneinander. Beispielsweise bewickelt der erste Wicklungszweig 10 WA die erste Nutspule des ersten Pols P1' mit zwei halben Windungen, da die ersten beiden Teilabschnitte T1, T2 die Nutspule bewickeln, während der dritte Teilabschnitt T3 die Nutspule nicht bewickelt. Der zweite Wicklungszweig 10WB bewickelt jedoch die erste Nutspule des ersten Pols P1' mit einer halben Windung, da der erste Teilabschnitt T1 die erste Nutspule bewickelt, während der zweite Teilabschnitt T2 und der dritte Teilabschnitt T3 die erste Nutspule nicht bewickeln.
Für jede Nutspule gilt jedoch, dass die Summe der Windungszahlen der beiden Wicklungszweige gleich ist und drei Halbe beträgt. Es gilt $z_N = 3$. Die Pole werden durch jeden Wicklungszweig gleichstark bewickelt, nämlich durch drei halbe Windungen. Folglich ist auch die Summe der Windungszahlen der Wicklungszweige für jeden Pol gleich und beträgt sechs Halbe. Da die Pole durch jeden Wicklungszweig gleichstark bewickelt sind, sind Ausgleichströme zwischen den Wicklungszweigen extrem unwahrscheinlich.

Der erste Wicklungszweig 10WA bewickelt die erste Nutspule des ersten Pols und die erste Nutspule des zweiten Pols mit zwei halben Windungen, während er die erste Nutspule des dritten Pols und die erste Nutspule des vierten Pols nur mit einer halben Windung bewickelt.

Die spannungshaltende Windungszahl ergibt sich bei der zehnten Wicklung W10 zu

$$w10 = \frac{2 \times 2 \times 3}{2} = 6 \,.$$

In einem elften Ausführungsbeispiel ist eine elfte Wicklung W11 vorgesehen, die im wesentlichen der zehnten Wicklung W10 des zehnten Ausführungsbeispiels entspricht mit dem Unterschied, dass der erste Wicklungszweig 11WA die erste Nut des ersten Pol und die erste Nut des dritten Pols mit zwei halben Windungen bewickelt und die erste Nut des zweiten Pols und die erste Nut des vierten Pols mit einer halben Windung bewickelt. Zum Ausgleich bewickelt der zweite Wicklungszweig 11 WB die erste Nut des ersten Pols und die erste Nut des dritten Pols mit einer halben Wicklung und die erste Nut des zweiten Pols und die erste Nut des vierten Pols mit zwei halben Windungen (siehe Figur 13). Die spannungshaltende Windungszahl ergibt sich wie beim zehnten Ausführungsbeispiel bei der elften Wicklung W11 zu

$$w11 = \frac{2 \times 2 \times 3}{2} = 6 \,.$$

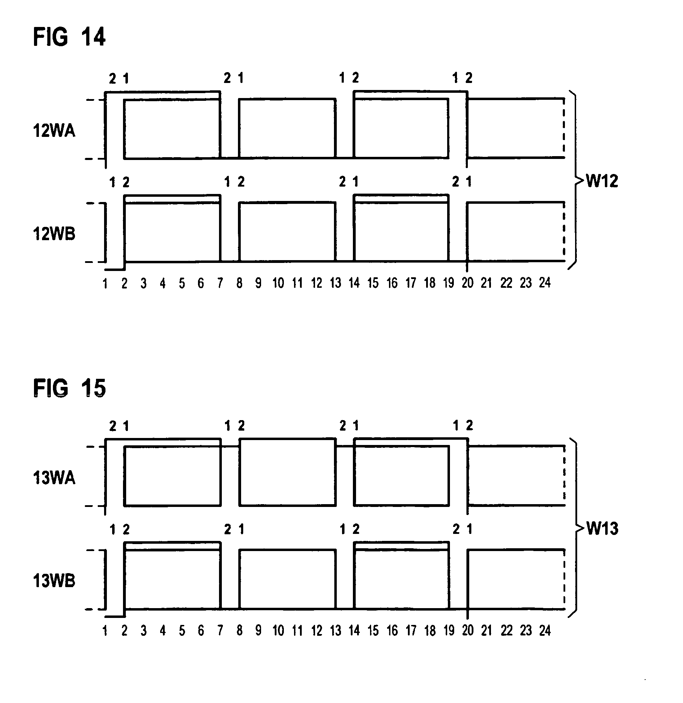

In einem zwölften Ausführungsbeispiel ist eine zwölfte Wicklung W12 vorgesehen, die drei Stränge aufweist, die jeweils durch zwei Wicklungszweige 12WA und 12WB gebildet werden. In der Figur 14 ist nur einer der drei Stränge dargestellt. Die zwölfte Wicklung W12 weist ferner vier Pole und 24 Nuten aufweist. Jeder Pol wird durch zwei Nutspulen gebildet. Die Verteilung der Windungen pro Wicklungszweig entspricht der Verteilung der Windungen pro Wicklungszweig der zehnten Wicklung W10 des zehnten Ausführungsbeispiels. Folglich haben die zwölfte Wicklung W12 und die zehnte Wicklung W10 die gleiche spannungshaltende Windungszahl:

$$w12 = \frac{2 \times 2 \times 3}{2} = 6 \,.$$

Im Gegensatz zur zehnten Wicklung W10 ist die zwölfte Wicklung W12 als Schleifenwicklung ausgeführt (siehe Figur 14). Folglich weist die zwölfte Wicklung W12 im Gegensatz zur zehnten Wicklung W10 pro Wicklungszweig .12WA, 12WB quasi nur einen statt drei Teilabschnitte auf.

In einem dreizehnten Ausführungsbeispiel ist eine dreizehnte Wicklung W13 vorgesehen, die drei Stränge aufweist, die jeweils durch zwei Wicklungszweige 13WA, 13WB gebildet werden. In der Figur 15 ist nur einer der drei Stränge dargestellt. Ferner weist die dreizehnte Wicklung W13 vier Pole und 24 Nuten aufweist. Die Verteilung der Windungen pro Wicklungszweig 13WA, 13WB entspricht der Verteilung der Windungen der Wicklungszweige 11 WA, 11WB der elften Wicklung W11 des elften Ausführungsbeispiels. Statt drei Teilabschnitte pro Wicklungszweig weist jedoch die dreizehnte Wicklung W13quasi nur einen Teilabschnitt pro Wicklungszweig 13WA, 13WB auf. Die Wicklungszweige 13WA, 13WB sind als Schleifenwicklungen ausgeführt (siehe Figur 15). Die spannungshaltende Windungszahl der dreizehnten Wicklung W13 entspricht der der elften Wicklung W11:

$$w13 = \frac{2 \times 2 \times 3}{2} = 6 \,.$$

**Patentansprüche**

1. Wicklung für eine elektrische Maschine

   - mit mindestens zwei Polen,
   - mit mindestens einem Strang, durch den die Pole bewickelt sind und der mindestens zwei parallel geschaltete Wicklungszweige (1WA, 1WB, 1WC, 1WD) aufweist,
   - bei der mindestens ein Pol (P1) durch mindestens zwei Wicklungszweige (1WB, 1WC, 1WD) bewickelt ist,
   - bei der mindestens einer der Wicklungszweige (1WA, 1WB, 1WC, 1WD) an der Bewicklung von mindestens zwei Polen beteiligt ist,
   - bei der mindestens zwei der Wicklungszweige (1WA, 1WB) sich in der Bewicklung mindestens eines der Pole (P1) **dadurch** voneinander unterscheiden, dass zumindest eine zwischen zwei benachbarten Polen angeordnete Nut mit Leitern von mindestens zwei parallelen Wicklungszweigen eines Stranges belegt ist und sich die Anzahl der Leiter mindestens eines Wicklungszweiges dieses Stranges in dieser Nut von der Anzahl der Leiter der übrigen Wicklungszweige dieses Stranges in dieser Nut unterscheidet und

- bei der die Pole durch die Wicklungszweige (1WA, 1WB, 1WC, 1WD) im Sinne eines im wesentlichen symmetrischen Strombelags des Strangs bewickelt sind.

**2.** Wicklung nach Anspruch 1,

- bei der sich die den Wicklungszweigen (1WA, 1WB) zugeordneten Bewicklungen des mindestens einen Pols (P1) hinsichtlich der Windungszahlen voneinander unterscheiden.

**3.** Wicklung nach Anspruch 2,

- bei der die Summe der Windungszahlen aller Wicklungszweige (1WA, 1WB, 1WC, 1WD) für jeden Pol im Wesentlichen gleich ist.

**4.** Wicklung nach Anspruch 2 oder 3,

- bei der mindestens einer der Wicklungszweige (1WA) mindestens einen der Pole (P1) schwächer bewickelt als die übrigen Polen.

**5.** Wicklung nach Anspruch 4,

- mit 2*p Polen, die p Polpaare bilden,
- mit p Wicklungszweigen (1WA, 1WB, 1WC, 1WD),
- bei der die Bewicklungen der Pole durch die Wicklungszweige (1WA, 1WB, 1WC, 1WD) sich **dadurch** voneinander unterscheiden, daß jeder Wicklungszweig (1WA, 1WB, 1WC, 1WD) an der Bewicklung jeweils eines Polpaars schwächer beteiligt ist als die übrigen Wicklungszweige (1WA, 1WB, 1WC, 1WD).

**6.** Wicklung nach Anspruch 4,

- mit 2*p Polen,
- mit 2*p Wicklungszweigen (3WA, 3WB, 3WC, 3WD, 3WE, 3WF, 3WG, 3WH),
- bei der die Bewicklungen der Pole durch die Wicklungszweige sich **dadurch** voneinander unterscheiden, daß jeder Wicklungszweig zwei zueinander benachbarte Pole schwächer bewickelt als die übrigen Pole, wobei jeder Pol durch zwei Wicklungszweige schwächer bewickelt ist als durch die übrigen Wicklungszweige und wobei ein dem Pol benachbarter Pol durch die zwei Wicklungszweige unterschiedlich bewickelt ist.

**7.** Wicklung nach einem der Ansprüche 2 bis 4,

- bei der mindestens einer der Wicklungszweige (2WA, 2WB, 2WC, 2WD) mindestens einen der Pole stärker bewickelt als die übrigen Pole.

**8.** Wicklung nach Anspruch 7,

- mit 2*p Polen, die p Polpaare bilden,
- mit p Wicklungszweigen (2WA, 2WB, 2WC, 2WD),
- bei der die Bewicklungen der Pole durch die Wicklungszweige sich **dadurch** voneinander unterscheiden, daß jeder Wicklungszweig jeweils ein Polpaar stärker bewickelt als die übrigen Wicklungszweige.

**9.** Wicklung nach Anspruch 7,

- mit 2*p Polen,
- mit 2*p Wicklungszweigen (4WA, 4WB, 4WC, 4WD, 4WE, 4WF, 4WG, 4WH),
- bei der die Bewicklungen der Pole durch die Wicklungszweige sich **dadurch** voneinander unterscheiden, daß jeder Wicklungszweig zwei zueinander benachbarte Pole stärker bewickelt als die übrigen Pole, wobei jeder Pol durch zwei Wicklungszweige stärker bewickelt ist als durch die übrigen Wicklungszweige und wobei ein dem Pol benachbarter Pol durch die zwei Wicklungszweige unterschiedlich bewickelt ist.

**10.** Wicklung nach Anspruch 1,

- bei der die Bewicklung des mindestens einen Pols (P1') durch mindestens zwei Nutspulen gebildet wird,
- bei der sich die den Wicklungszweigen (10WA, 10WB) zugeordneten Bewicklungen des mindestens einen Pols (P1') hinsichtlich der Windungszahlen der Nutspulen des Pols (P1') voneinander unterscheiden.

**11.** Wicklung nach Anspruch 10,

- bei der die Summe der Windungszahlen aller Wicklungszweige (10WA, 10WB) für jede Nutspule des mindestens einen Pols (P1') gleich ist.

**12.** Wicklung nach Anspruch 10 oder 11,

- bei der die Windungszahlen der Wicklungszweige (10WA, 10WB) für den mindestens einen Pol (P1') gleich sind.

**13.** Wicklung nach einem der Ansprüche 10 bis 12,

- bei der jeder Wicklungszweig (10WA, 10WB) mindestens zwei Teilabschnitte (T1, T2, T3) aufweist,
- bei der jeder Teilabschnitt (T1, T2, T3) jeden Pol mit einer halben Windung bewickelt,
- bei der jeder Teilabschnitt (T1, T2, T3) höchstens mit einer halben Windung an der Bewicklung derselben Nutspule beteiligt ist.

**14.** Wicklung nach den Ansprüchen 11, 12 und 13,

- mit zwei Wicklungszweigen (10WA, 10WB),
- bei der jeder Wicklungszweig (10WA, 10WB) drei Teilabschnitte (T1, T2, T3) aufweist,
- bei der jeder Pol durch zwei Nutspulen gebildet wird,
- bei der jede Nutspule durch zwei Teilabschnitte (T1, T2, T3) eines der Wicklungszweige (10WA, 10WB) bewickelt ist und durch einen Teilabschnitt (T1, T2, T3) eines anderen der Wicklungszweige (10WA, 10WB) bewickelt ist.

**15.** Wicklung nach einem der Ansprüche 1 bis 14,

- bei der die Pole gleichmäßig entlang einer in sich geschlossenen Linie angeordnet sind.

**16.** Wicklung nach einem der Ansprüche 1 bis 15,

- die als Drehfeldwicklung ausgestaltet ist.

**17.** Wicklung nach einem der Ansprüche 1 bis 16,

- die Nuten (1,...24) aufweist, in denen die Wicklungszweige (1WA, 1WB, 1WC, 1WD) eingelegt sind.

**18.** Wicklung nach Anspruch 17,

- die eine Lochzahl aufweist, die eine natürliche Zahl ist.

**Claims**

**1.** Winding for an electrical machine

- with at least two poles,
- with at least one phase, by which the poles are wound and which features at least two winding branches connected in parallel (1WA, 1WB, 1WC, 1WD),
- in which at least one pole (P1) is wound by at least two winding branches (1WB, 1WC, 1WD),
- in which at least one of the winding branches (1WA, 1WB, 1WC, 1WD) is involved in the winding of at least two poles,
- in which at least two of the winding branches (1WA, 1WB) differ from each other in the winding of at least one of the poles (P1) that at least one slot arranged between two adjacent poles is occupied by conductors of at least two parallel winding branches of a phase and the number of the conductors differs from at least one winding branch of this phase in this slot differs from the number of the conductors of the other winding branch of this phase in this slot and
- in which the poles are wound by the winding branches (1WA, 1WB, 1WC, 1WD) in the sense of an essentially symmetrical electric loading of the phase.

**2.** Winding in accordance with claim 1,

- in which the windings of the at least one pole (P1) assigned to the winding branches (1WA, 1WB) differ from one another as regards the numbers of windings.

**3.** Winding in accordance with claim 2,

- in which the total of the number of windings of all winding branches (1WA, 1WB, 1WC, 1WD) for each pole is essentially the same.

**4.** Winding in accordance with claim 2 or 3,

- in which at least one of the winding branches (1WA) of at least one of the poles (P1) is wound less strongly than the other poles.

**5.** Winding in accordance with claim 4,

- with 2*p poles, forming p pole pairs,
- with p winding branches (1WA, 1WB, 1WC, 1WD),
- in which the windings of the poles by the winding branches (1WA, 1WB, 1WC, 1WD) differ from one another in that each winding branch (1WA, 1WB, 1WC, 1WD) is involved less strongly in the winding of one pair of poles than the other winding branches (1WA, 1WB, 1WC, 1WD).

**6.** Winding in accordance with claim 4,

- with 2*p poles,
- with 2*p winding branches (3WA, 3WB, 3WC, 3WD, 3WE, 3WF, 3WG, 3WH),
- in which the windings of the poles by the winding branches differ from each other in that each winding branch of two adjacent poles is wound less strongly than the other poles, with each pole being wound less strongly by two winding branches than by the other winding branches, and with a pole adjacent to the pole being wound differently by the two winding branches.

**7.** Winding in accordance with one of the claims 2 to 4,

- in which at least one of the winding branches (2WA, 2WB, 2WC, 2WD) of at least one of the poles is more strongly wound than the other

**8.** Winding in accordance with claim 7,

- with 2*p poles, forming p pole pairs,
- with p winding branches (2WA, 2WB, 2WC, 2WD),
- in which the windings of the poles by the winding branches differ from one another in that each winding branch winds one pole pair more strongly than the other winding branches.

**9.** Winding in accordance with claim 7,

- with 2*p poles,
- with 2*p winding branches (4WA, 4WB, 4WC, 4WD, 4WE, 4WF, 4WG, 4WH),
- in which the windings of the poles by the winding branches differ from each other in that each winding branch winds two adjacent poles more strongly than the other poles, with each pole being wound more strongly by two winding branches than by the other winding branches and with a pole adjacent to the pole being wound differently by the two winding branches.

**10.** Winding in accordance with claim 1,

- in which the winding of the at least one pole (P1') is formed by at least two slot coils,
- in which the windings of the at least one pole (P1') assigned to the winding branches (10WA, 10WB) differ from each other with regard to the number of windings of the slot coils of the pole (P1').

**11.** Winding in accordance with claim 10,

- in which the total of the numbers of windings of all winding branches (10WA, 10WB) for each slot coil of the at least one pole (P1') is the same.

**12.** Winding in accordance with claim 10 or 11,

- in which the numbers of windings of the winding branches (10WA, 10WB) for the at least one pole (P1') are the same.

**13.** Winding in accordance with one of the claims 10 to 12,

- in which each winding branch (I0WA, 10WB) has at least two subsections (T1, T2, T3),
- in which each subsection (T1, T2, T3) winds each pole with a half winding,
- in which each subsection (T1, T2, T3) is at most involved in the winding of the same slot coil with a half winding.

**14.** Winding in accordance with claims 11, 12 and 13,

- with two winding branches (10WA, 10WB),
- in which each winding branch (10WA, 10WB) features three subsections (T1, T2, T3),
- in which each pole is formed by two slot coils,
- in which each slot coil is wound by two subsections (T1, T2, T3) of one of the winding branches (10WA, 10WB) and is wound through another subsection (T1, T2, T3) of another of the winding branches (10WA, 10WB).

**15.** Winding in accordance with one of the claims 1 to 14,

- in which the poles are arranged evenly along a self-contained line.

**16.** Winding in accordance with one of the claims 1 to 15,

- which is designed as a rotating field winding.

**17.** Winding in accordance with one of the claims 1 to 16,

- featuring slots (1,...24) into which the winding branches (1WA, 1WB, 1WC, 1WD) are inserted.

**18.** Winding in accordance with claim 17,

- which features a number of holes which is a natural number.

**Revendications**

**1.** Enroulement pour une machine électrique

- avec au moins deux pôles,
- avec au moins un faisceau par lequel les pôles sont enroulés et qui comporte au moins deux bobines d'induit (1WA, 1WB, 1WC, 1WD) montées en parallèle,
- dans lequel au moins un pôle (P1) est enroulé par au moins deux bobines d'induit (1WB, 1WC, 1WD),
- dans lequel au moins l'une des bobines d'induit (1WA, 1WB, 1WC, 1WD) participe à l'enroulement d'au moins deux pôles,
- dans lequel au moins deux des bobines d'induit (1WA, 1WB) se distinguent dans l'enroulement d'au moins l'un des pôles (P1), en ce qu'au moins une encoche disposée entre deux pôles voisins est occupée par des conducteurs d'au moins deux bobines d'induit montées en parallèle d'un faisceau et en ce que le nombre de conducteurs d'au moins une bobine d'induit de ce faisceau dans cette encoche se distingue du nombre de conducteurs des autres bobines d'induit de ce faisceau dans cette encoche et

- dans lequel les pôles sont enroulés par les bobines d'induit (1WA, 1WB, 1WC, 1WD) dans le sens d'une densité linéique de courant sensiblement symétrique du faisceau.

2. Enroulement selon la revendication 1,

   - dans lequel les enroulements d'au moins le pôle (P1) qui sont associés aux bobines d'induit (1WA, 1WB) se distinguent mutuellement au niveau des nombres de spires.

3. Enroulement selon la revendication 2,

   - dans lequel la somme des nombres de spires de toutes les bobines d'induit (1WA, 1WB, 1WC, 1WD) est sensiblement identique pour chaque pôle.

4. Enroulement selon la revendication 2 ou 3,

   - dans lequel au moins l'une des bobines d'induit (1WA) enroule au moins l'un des pôles (P1) plus faiblement que les autres pôles.

5. Enroulement selon la revendication 4,

   - avec 2*p pôles, qui forment p paires de pôles,
   - avec p bobines d'induit (1WA, 1WB, 1WC, 1WD),
   - dans lequel les enroulements des pôles par les bobines d'induit (1WA, 1WB, 1WC, 1WD) se distinguent entre eux en ce que chaque bobine d'induit (1WA, 1WB, 1WC, 1WD) participe plus faiblement à l'enroulement de respectivement une paire de pôles que les autres bobines d'induit (1WA, 1WB, 1WC, 1WD).

6. Enroulement selon la revendication 4

   - avec 2*p pôles,
   - avec 2*p bobines d'induit (3WA, 3WB, 3WC, 3WD, 3WE, 3WF, 3WG, 3WH),
   - dans lequel les enroulements des pôles par les bobines d'induit se distinguent mutuellement en ce que chaque bobine d'induit enroule plus faiblement deux pôles voisins que les autres pôles, chaque pôle étant plus faiblement enroulé par deux bobines d'induit que par les autres bobines d'induit et un pôle voisin dudit pôle étant différemment enroulé par les deux bobines d'induit.

7. Enroulement selon l'une des revendications 2 à 4,

   - dans lequel au moins l'une des bobines d'induit (2WA, 2WB, 2WC, 2WD) enroule au moins l'un des pôles plus fortement que les autres pôles.

8. Enroulement selon la revendication 7,

   - avec 2*p pôles, qui forment p paires de pôles,
   - avec p bobines d'induit (2WA, 2WB, 2WC, 2WD),
   - dans lequel les enroulements des pôles par les bobines d'induit se distinguent mutuellement en ce que chaque bobine d'induit enroule respectivement une paire de pôles plus fortement que les autres bobines d'induit.

9. Enroulement selon la revendication 7,

   - avec 2*p pôles,
   - avec 2*p bobines d'induit (4WA, 4WB, 4WC, 4WD, 4WE, 4WF, 4WG, 4WH),
   - dans lequel les enroulements des pôles par les bobines d'induit se distinguent mutuellement en ce que chaque bobine d'induit enroule deux pôles voisins plus fortement que les autres pôles, chaque pôle étant enroulé plus fortement par deux bobines d'induit que par les autres bobines d'induit et un pôle voisin du pôle étant enroulé différemment par les deux bobines d'induit.

10. Enroulement selon la revendication 1,

    - dans lequel l'enroulement d'au moins le pôle (P1') est formé par au moins deux bobines à encoches,
    - dans lequel les enroulements d'au moins le pôle (P1') qui sont associés aux bobines d'induit (10WA, 10WB) se distinguent au niveau des nombres de spires des bobines à encoches du pôle (P1').

11. Enroulement selon la revendication 10,

    - dans lequel la somme des nombres de spires de toutes les bobines d'induit (10WA, 10WB) est identique pour chaque bobine à encoches d'au moins le pôle (P1').

12. Enroulement selon la revendication 10 ou 11,

    - dans lequel les nombres de spires des bobines d'induit (10WA, 10WB) pour au moins le pôle (P1') est identique.

13. Enroulement selon l'une des revendications 10 à 12,

    - dans lequel chaque bobine d'induit (10WA, 10WB) comporte au moins deux tronçons partiels (T1, T2, T3),
    - dans lequel chaque tronçon partiel (T1, T2, T3) enroule chaque pôle avec une demi spire,

dans lequel chaque tronçon partiel (T1, T2, T3) participe au maximum avec une demi spire à l'enroulement de la même bobine à encoches.

**14.** Enroulement selon les revendications 11, 12 et 13,

- avec deux bobines d'induit (10WA, 10WB),
- dans lequel chaque bobine d'induit (10WA, 10WB) comporte trois tronçons partiels (T1, T2, T3),
- dans lequel chaque pôle est formé par deux bobines à encoches,
- dans lequel chaque bobine à encoches est enroulée par deux tronçons partiels (T1, T2, T3) de l'une des bobines d'induit (10WA, 10WB) et est enroulée par un tronçon partiel (T1, T2, T3) d'une autre des bobines d'induit (10WA, 10WB).

**15.** Enroulement selon l'une des revendications 1 à 14,

- dans lequel les pôles sont disposés de façon homogène le long d'une ligne fermée sur soi.

**16.** Enroulement selon l'une des revendications 1 à 15,

- conçu sous la forme d'un enroulement à champ tournant.

**17.** Enroulement selon l'une des revendications 1 à 16,

- comportant des encoches (1, ..., 24) dans lesquelles les bobines d'induit (1WA, 1WB, 1WC, 1WD) sont insérées.

**18.** Enroulement selon la revendication 17,

- comportant un nombre de trous qui est un nombre naturel.

**FIG 1a**
Stand der Technik

**FIG 1b**
Stand der Technik

**FIG 2**
Stand der Technik

FIG 3

FIG 4

FIG 5

FIG 6

## FIG 7

5WA

5WB

5WC

W5

1 2 3 4 5 6 7 8 9 10 11 12 13 14 15 16 17 18 19 20 21 22 23 24 25 26 27 28 29 30 31 32 33 34 35 36

## FIG 8

6WA

6WB

6WC

W6

1 2 3 4 5 6 7 8 9 10 11 12 13 14 15 16 17 18 19 20 21 22 23 24 25 26 27 28 29 30 31 32 33 34 35 36

## FIG 9

7WA

7WB

7WC

W7

1 2 3 4 5 6 7 8 9 10 11 12 13 14 15 16 17 18 19 20 21 22 23 24 25 26 27 28 29 30 31 32 33 34 35 36

8WA

8WB

8WC

1 2 3 4 5 6 7 8 9 10 11 12 13 14 15 16 17 18 19 20 21 22 23 24 25 26 27 28 29 30 31 32 33 34 35 36

W8

FIG 10

9WA

9WB

9WC

1 2 3 4 5 6 7 8 9 10 11 12 13 14 15 16 17 18 19 20 21 22 23 24 25 26 27 28 29 30 31 32 33 34 35 36

W9

FIG 11

FIG 12

FIG 13

## FIG 14

## FIG 15